Europäisches Patentamt

European Patent Office

Office européen des brevets

(19)

(11) Veröffentlichungsnummer: **0 200 259**
**B1**

(12) **EUROPÄISCHE PATENTSCHRIFT**

(45) Veröffentlichungstag der Patentschrifft:
28.02.90

(21) Anmeldenummer: 86200661.6

(22) Anmeldetag: 18.04.86

(51) Int. Cl. ⁵: **C 10 K 1/04, C 10 K 1/06, C 10 J 3/84, C 10 K 1/00**

(54) Verfahren zum Behandeln von Kondensat aus dem Produktgas der Vergasung fester Brennstoffe.

(30) Priorität: 30.04.85 DE 3515484

(43) Veröffentlichungstag der Anmeldung:
05.11.86 Patentblatt 86/45

(45) Bekanntmachung des Hinweises auf die Patenterteilung:
28.02.90 Patentblatt 90/09

(84) Bennante Vertragsstaaten:
AT BE DE FR GB IT NL

(56) Entgegenhaltungen:
DE-A-2 542 055
DE-A-2 607 745
US-A-4 295 864

(73) Patentinhaber: METALLGESELLSCHAFT AG
Reuterweg 14 Postfach 3724
D-6000 Frankfurt/M.1 (DE)

(72) Erfinder: Rudolph, Paul
Friedrichsdorfer Strasse 17
D-6380 Bad Homburg v.d.H. (DE)
Erfinder: Herbert, Peter, Dr.
Frauensteinplatz 15
D-6000 Frankfurt am Main (DE)

(74) Vertreter: Rieger, Harald, Dr.
Reuterweg 14
D-6000 Frankfurt am Main (DE)

LIBERGRAF, STOCKHOLM 1990

## Beschreibung

Die Erfindung betrifft ein Verfahren zur Behandlung von Kondensat, das bei der Vergasung fester Brennstoffe mit mindestens einem der Vergasungsmittel Sauerstoff, Wasserdampf oder Kohlendioxid bei einem Druck von 5 bis 100 bar bei der stufenweisen Kühlung des Produktgases der Vergasung anfällt, wobei man das Produktgas zunächst durch einen Waschkühler leitet, in welchem das Produktgas mit dem weitgehend aus Wasser bestehenden Kondensat besprüht wird, wodurch Halogene weitgehend ausgewaschen werden, daß man das Produktgas in einem Abhitzekessel weiter indirekt kühlt und dabei gebildetes Kondensat mit dem Kondensat aus dem Waschkühler zu einem Halogene und Zyanide enthaltenden Kondensatgemisch, das Temperaturen von 120 bis 220°C aufweist, vereinigt, daß man das Kondensatgemisch auf einen niedrigeren Druck entspannt, wobei Entspannungsdampf und eine Flüssigphase entstehen und daß der von Halogenen praktisch freie Entspannungsdampf abgeleitet wird.

Ein solches Verfahren ist aus der US-A-4 295 864 bekannt, wobei man die nach der Entspannung verbleibende Flüssigphase nicht direkt in den Waschkühler leitet. Beim Verfahren der DE-A-2 542 055 wird auf die gezielte Anwendung der Entspannungsverdampfung verzichtet.

Die Vergasung fester Brennstoffe, insbesondere Kohle, Braunkohle oder Torf, im nach unten bewegten Festbett ist bekannt und ausführlich in Ullmanns Enzyklopädie der technischen Chemie, 4. Auflage (1977), Band 14, Seiten 383 bis 386, dargestellt. Einzelheiten des bekannten Vergasungsverfahrens finden sich auch in den US-Patentschriften 3 540 867 und 3 854 895. Die Vergasung fester, körniger Brennstoffe im Festbett mit Abzug flüssiger Schlacke ist in den britischen Patentschriften 1 507 905, 1 506 671 und 1 512 677 beschrieben. Der bei diesen bekannten Verfahren verwendete körnige Brennstoff weist bevorzugt Korngrößen im Bereich von 3 bis 80 mm auf.

Das Produktgas der Vergasung fester Brennstoffe, insbesondere Kohle, enthält u.a. anorganische und organische Verbindungen, die für die Aufbereitung des beim Kondensieren anfallenden Abwassers Schwierigkeiten bereiten und eine umweltfreundliche Entsorgung gefährden. Das Kondensat enthält zumeist Teer und Öl, die durch Dekantieren abgeschieden werden, und Phenole, die man durch Extraktion entfernen kann, sowie auch Fettsäuren, die man ebenso wie die Phenole durch eine biologische Reinigung beseitigen kann.

Viel schwieriger ist die Entfernung von Halogenen, wie Chlor und Fluor, wobei der Chlorgehalt der Kohle bis zu 0,4 Gew.-% und manchmal auch mehr betragen kann. Im Produktgas und damit im Kondensat sind außerdem Zyanide enthalten. Die Anwesenheit von Halogenen und Zyaniden in einem aus dem Verfahren abgezogenen Abwasser erschwert die extraktiven und biologischen Abwasserreinigungsverfahren oder macht deren Anwendung ganz unmöglich. Deshalb müssen Halogene vorher entfernt oder zumindest weitgehend reduziert werden, wobei man sie bevorzugt in eine deponiefähige Form überführt. Wichtig ist auch, die in einem als Abwasser abzuleitenden Kondensat enthaltenen Zyanide zu vernichten.

Der Erfindung liegt die Aufgabe zugrunde, einen Abwasserstrom geringer Menge zu erhalten, der hoch mit Halogenen beladen ist und dessen Entsorgung auf einfache und kostengünstige Weise erfolgen kann, gleichzeitig sollen die Zyanide gezielt entfernt werden. Erfindungsgemäß geschieht dies beim eingangs genannten Verfahren dadurch, daß man den überwiegenden Teil der bei der Entspannung entstehenden Flüssigphase direkt in den Waschkühler leitet und durch Einstellen der Menge dieses Teils die Menge des Entspannungsdampfes auf mindestens 70 % des Wassergehalts des dem Waschkühler zugeführten Produktgases einstellt, daß man die restliche Flüssigphase als halogenreichen Teilstrom einer Entsorgung zuführt, daß man den pH-Wert der Flüssigkeit, die im Kreislauf über den Waschkühler und die Entspannungsverdampfung geführt wird, auf über 8 einstellt, wobei man zum Einstellen des pH-Wertes Kondensat aus mindestens einer dem Abhitzekessel folgenden Produktgas-Kühlung dem dem Waschkühler aufzugebenden Kondensat zumischt, und daß man den pH-Wert im Kondensatgemisch vor der Entspannung

a) entweder auf unter 10 einstellt, wobei sich Zyanide im Entspannungsdampf anreichern,

b) oder auf über 10 bis 12 einstellt, wobei sich Zyanide bei der Entspannung in der Flüssigphase anreichern.

Beim Verfahren der Erfindung wird von der Entspannungsverdampfung des Kondensats aus dem Waschkühler Gebrauch gemacht, weil die Halogene, insbesondere Chlorverbindungen, in der bei der Entspannung entstehenden Flüssigphase verbleiben und der Entspannungsdampf frei von Halogenen ist. Die Kühlwirkung der Entspannungsverdampfung ist hierbei nur ein Nebeneffekt, während es bevorzugt darum geht, einen größeren Abwasserstrom zu erhalten, der chloridfrei ist, sowie einen möglichst kleinen Abwasserstrom, der praktisch sämtliches Chlorid enthält.

Die Aufteilung in einen kleineren Abwasserstrom mit hohem Halogengehalt und in einen größeren Abwasserstrom in Form von halogenfreiem Entspannungsdampf wird dadurch bewirkt, daß eine große Menge an Kondensat (Kreislaufwasser) dem Waschkühler zugeführt, anschließend entspannt und als Flüssigphase wieder zum Waschkühler zurückgeführt wird. Die bei der Entspannung freigesetzte Verdampfungswärme wird aus dem Wärmeinhalt des Produktgases durch Wärmeaustausch von Gas und Kreislaufwasser im Waschkühler gedeckt.

Aus dem Wasserdampf W, der im Rohgas vor dem Eintritt in den Waschkühler enthalten ist, kann man nach Kühlung und Entspannung ein halogenreiches Abwasser gewinnen, dessen Menge $n = 5\ \%$ bis $30\ \%$ der Wassermenge W beträgt. Dabei gilt die Beziehung

$$\frac{UW}{W} = \frac{r}{(I - i)\,(1 + \frac{1}{n}).}$$

Dabei bedeutet

UW = die Kondensatmenge, die der Entspannung zugeführt wird,
W = die Menge an Wasserdampf, die in dem dem Waschkühler zugeführten Rohgas enthalten ist,
r = die Verdampfungswärme beim Entspannungsdruck
I = der Wärmeinhalt des zu entspannenden Wassers
i = der Wärmeinhalt des entspannten Wassers und
n = Menge des halogenreichen Abwassers nach Entspannung, bezogen auf die Wassermenge W (n = 0,05 bis 0,3).

Wird z. B. auf 1 bar entspannt und beträgt die Temperatur des zu entspannenden Wassers 160°C, so ist bei n = 0,2 das Verhältnis UW : W = 7,49. Aus der Formel ist zu sehen, daß durch die Bemessung der Wasserdampfmenge, die über den Waschkühler zur Entspannung geführt wird, die mengenmäßige Aufteilung in die 2 verschiedenen Abwasserströme, halogenreich und halogenarm, durchführbar ist. Hierdurch wird durch Einstellen der Menge des in den Waschkühler zurückgeleiteten Teils der Flüssigkeit die Menge des Entspannungsdampfes auf mindestens 70 % des Wassergehalts des dem Waschkühler zugeführten Produktgases eingestellt.

Der Abwasserstrom mit dem hohen Halogen- und insbesondere Chlorgehalt bedarf einer besonderen Behandlung, um das Chlor zu neutralisieren. Dies kann bekannterweise z. B. durch Zusatz von Alkalien erfolgen. Außerdem müssen die in diesem Abwasserstrom enthaltenen organischen Verbindungen unschädlich gemacht werden. Da es sich hier aber um eine relativ kleine Abwassermenge handelt, sind die hierfür notwendigen Entsorgungsmaßnahmen kostengünstig durchführbar.

Je nach Verfahrensführung im Vergasungsreaktor und in Abhängigkeit vom eingesetzten Brennstoff beträgt der HCN-Gehalt im rohen Produktgas etwa 3 bis 10 Gew.-% des im Brennstoff enthaltenen Stickstoffs. HCN ist wasserlöslich und in höherer Konzentration schädlich für die extraktive und vor allem für die biologische Abwasserreinigung. Wenn man dafür sorgt, daß der pH-Wert in dem der Entspannungsverdampfung aufgegebenen Kondensat niedriger als 10 ist, reichern sich Zyanide im Entspannungsdampf an. Hier nun ist es die einfachste Entsorgung, den Entspannungsdampf in oxidierender Atmosphäre hoch zu erhitzen, wofür sich eine Verbrennung im kohlegefeuerten Wirbelbett anbietet. Dabei herrschen Verbrennungstemperaturen von etwa 900°C, die hoch genug sind, um HCN und organische Verbindungen zu verbrennen, wobei jedoch gleichzeitig der Gehalt an Stickoxiden im Verbrennungsgas im Rahmen zulässiger Emissionswerte bleibt. Der Wärmeaufwand für das kohlegefeuerte Wirbelbett mit der Aufgabenstellung, den Entspannungsdampf zu verbrennen, ist vernachlässigbar gering. Die Entsorgung kann auch über eine Wirbelbettvergasung geschehen, wie dies in der deutschen Offenlegungsschrift 3 310 220 beschrieben ist; eine andere Möglichkeit ist eine Verbrennung unter Zufuhr gasförmiger oder flüssiger Brennstoffe.

Soll der Gehalt an Zyaniden im Entspannungsdampf möglichst niedrig sein, um z. B. das Kondensat dieses Dampfes biologisch zu reinigen, ist es notwendig, HCN in der beim Entspannen verbleibenden Flüssigphase zurückzuhalten. Dies gelingt dadurch, daß man den pH-Wert in dem der Entspannung zugeführten Kondensat über 10 bis 12 hält. Man erreicht dies etwa dadurch, daß Alkalien, z. B. Natronlauge, direkt dem Kondensatkreislauf zugeführt werden. Unter diesen Bedingungen verbleibt HCN in der Flüssigphase und kann mit dem Abwasser abgezogen werden. Zum Behandeln dieses HCN-reichen Abwassers empfiehlt sich die Verbrennung.

Zur Vermeidung von Korrosionen ist es erfahrungsgemäß notwendig, den pH-Wert der Flüssigkeiten (Kondensat, Abwasser) auf Werte über 8 einzustellen. Bei ausreichendem $NH_3$-Gehalt im rohen Produktgas geschieht dies dadurch, daß man Kondensat aus mindestens einer dem Waschkühler nachgeschalteten Kühlstufe in das dem Waschkühler zugeführte Kondensat gibt. Ammoniak reichert sich nämlich im Kondensat der bei niedrigerer Temperatur arbeitenden Kühlstufe oder Kühlstufen an und kann in den Waschkühler zurückgeführt werden.

Wie bereits erläutert, kann der Entspannungsdampf, sofern er einen hohen Zyanid-Gehalt aufweist, einer thermischen Behandlung, insbesondere Verbrennung, bei Temperaturen von über 800°C unterzogen werden. Diese Verbrennung kann z. B. mit Zusatzbrennstoff in einem Verbrennungsofen oder in einer mit Kohle gespeisten Wirbelbettverbrennung erfolgen, auch kann man den Entspannungsdampf einer Wirbelbettvergasung aufgeben. Ist der Entspannungsdampf aber praktisch frei von Zyaniden, so kann man ihn kondensieren und das Kondensat mit den darin enthaltenen organischen Stoffen einer extraktiven und/oder einer biologischen Wasserbehandlung unterziehen.

Einzelheiten des Verfahrens werden mit Hilfe der Zeichnung erläutert. Es zeigt:

Fig. 1   eine erste Variante des Verfahrens ausgehend von einer Vergasung im Festbett und
Fig. 2   eine zweite Verfahrensvariante, ausgehend von der Vergasung einer Kohlenstaub-Wasser-Aufschlämmung.

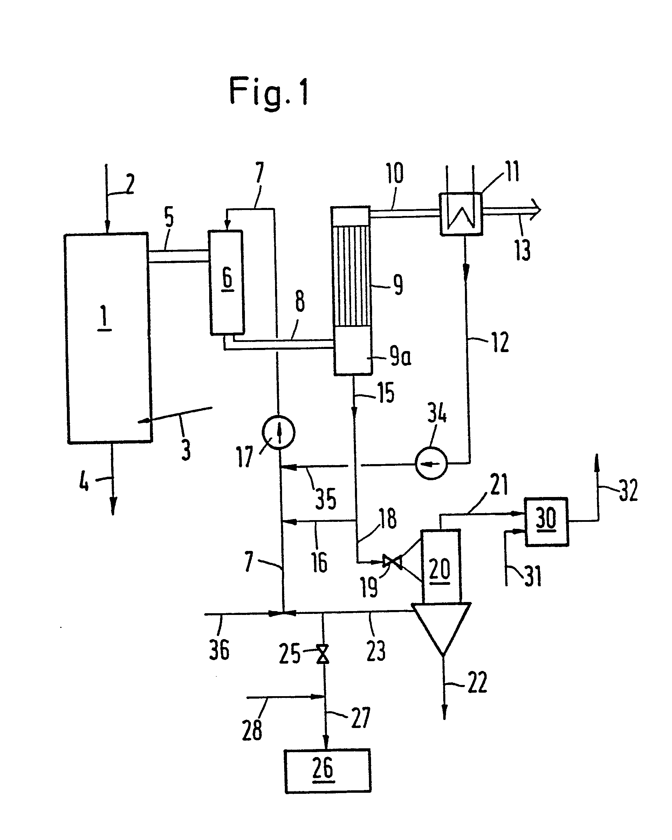

Beim Verfahren der Fig. 1 wird in einem an sich bekannten Vergasungsreaktor 1 körnige Kohle mit Korngrößen im Bereich von üblicherweise 3 bis 60 mm aus der Leitung 2 vergast. Als Vergasungsmittel dient bevorzugt ein Gemisch aus Sauerstoff und Wasserdampf, das durch eine von mehreren Düsen 3 in die Vergasung geleitet wird. Flüssige Schlacke verläßt den Reaktor 1 durch die Leitung 4. Rohes Produktgas der Vergasung zieht in der Leitung 5 mit

EP 0 200 259 B1

Temperaturen von etwa 400 bis 800°C ab und wird einem Waschkühler 6 aufgegeben. Im Waschkühler wird das Produktgas mit weitgehend aus Wasser bestehendem Kondensat aus der Leitung 7 besprüht, wobei man pro m³ Gas etwa 1 bis 5 kg Kondensat einsetzt. Kondensat und Gas verlassen den Waschkühler 6 in der Leitung 8 und treten in einen Abhitzekessel 9 ein. Im Abhitzekessel erfolgt eine indirekte Kühlung des Gases mittels Speisewasser, dessen Zu- und Ableitungen nicht dargestellt sind. Kondensat sammelt sich im Sumpf 9a des Abhitzekessels. In der Leitung 8 liegen die Temperaturen üblicherweise im Bereich von 150 bis 220°C und im Sumpf 9a betragen die Temperaturen des Kondensats 120 bis 200°C und vorzugsweise 140 bis 180°C.

Der Waschkühler 6 und der anschließende Abhitzekessel 9 stellen für das rohe Produktgas die erste Kühlstufe dar. Das Gas verläßt die erste Kühlstufe in der Leitung 10 und gelangt zu einer zweiten Kühlstufe, die durch den Wärmeaustauscher 11 angedeutet ist. Hier erfolgt durch indirekte Kühlung die Bildung von weiterem Kondensat, das in der Leitung 12 abzieht. Das Produktgas verläßt den Wärmeaustauscher 11 in der Leitung 13 mit Temperaturen von etwa 80 bis 130°C und wird einer an sich bekannten weiteren Behandlung zugeführt, z. B. einer weiteren Kühlung und Reinigung.

Aus dem Sumpf 9a des Abhitzekessels leitet man das angesammelte Kondensat in der Leitung 15 ab und führt einen Teilstrom durch die Leitung 16 mit Hilfe der Pumpe 17 zurück zum Waschkühler 6. Das restliche Kondensat gelangt in der Leitung 18 über ein Entspannungsventil 19 zu einem Abscheider 20. Die Mengenströme in den Leitungen 16 und 18 verhalten sich üblicherweise wie 1 : 2 bis 5 : 1. Über das Ventil 19 wird der Druck des aus der Leitung 18 kommenden Kondensats auf die Hälfte oder noch weiter abgesenkt, bei dieser Entspannung entsteht ein Entspannungsdampf, der in der Leitung 21 abgeführt wird. Die flüssige Phase bleibt im Abscheider 20, dort werden unter Schwerkraftwirkung Teer und Staub von wasserreichem Kondensat getrennt. Staubhaltiger Teer wird in der Leitung 22 abgezogen und wasserreiches Kondensat verläßt den Abscheider 20 in der Leitung 23. Der größere Teil des wäßrigen Kondensats aus der Leitung 23 wird in der Leitung 7 zum Waschkühler 6 zurückgeführt, der restliche kleine Teil wird als Abwasser über das Ventil 25 abgeführt und einer Entsorgung 26 aufgegeben. Das Abwasser in der Leitung 27 ist halogenreich und kann deshalb z. B. mit Natronlauge aus der Leitung 28 zum Neutralisieren versetzt werden.

Für den Entspannungsdampf der Leitung 21, der praktisch frei von Halogenen ist, kommen verschiedene Entsorgungsverfahren infrage; in der Zeichnung dargestellt ist eine Verbrennung 30 mit Hilfe von Zusatzbrennstoff aus der Leitung 31, wobei ein wasserdampfhaltiges Abgas entsteht, das die Verbrennung in der Leitung 32 verläßt.

Aus Gründen des Korrosionsschutzes empfiehlt es sich, in den wichtigsten der dargestellten Leitungen und Behälter einen pH-Wert größer 8 aufrechtzuerhalten. Zur Anhebung des pH-Wertes trägt das ammoniakreiche Kondensat aus der Leitung 12 bei, das über die Pumpe 34 und die Leitung 35 ebenfalls zum Waschkühler 6 und damit in den Wasserkreislauf zurückgeleitet wird.

Falls ein noch höherer pH-Wert erwünscht ist, kann man dem Kreislauf durch die Leitung 36 Alkali, z. B. NaOH. zugeben. Bei einem pH-Wert unter 10 im Kondensat der Leitung 18 konzentrieren sich die Zyanide im Entspannungsdampf der Leitung 21, so daß das Kondensat der Leitung 23 und das Abwasser der Leitung 27 von diesen Zyaniden entlastet sind. Der mengenmäßig kleine Abwasserstrom der Leitung 27, der halogenreich ist. wird durch Verfahrensweisen behandelt, die auf den hohen Chloridgehalt zugeschnitten sind. Zunächst erfolgt durch Zugabe von NaOH durch die Leitung 28 eine weitgehende Neutralisierung, wobei Natriumchlorid entsteht. Zur Entsorgung 26 kann dieses kochsalzhaltige Wasser eingedampft und die Salze können auskristallisiert werden, wobei sich auch noch eine Verbrennung empfiehlt, um die organischen Verbindungen zu beseitigen.

Liegt der pH-Wert im Kondensat der Leitung 18 aber im Bereich über 10 bis 12 so reichern sich nach der Entspannung die Zyanide in der Flüssigphase an und finden sich im Wasser der Leitungen 23 und 27 wieder. In der Entsorgungsanlage 26 werden diese Zyanide zusammen mit den organischen Verbindungen des Abwassers verbrannt. In diesem Falle eines pH-Wertes über 10 bis 12 wird der Zyanidgehalt im Entspannungsdampf der Leitung 21 mit steigendem pH-Wert so gering, daß der Entspannungsdampf kondensiert und das so entstehende Kondensat z. B. direkt in der Anlage als Gebrauchswasser verwendet werden kann. Ohne Schwierigkeiten kann das Kondensat auch extraktiv und biologisch von Phenolen und Fettsäuren gereinigt werden.

Das Verfahren der Fig. 1 wird prinzipiell in der gleichen, beschriebenen Weise durchgeführt, wenn man anstelle der Vergasung im Reaktor 1 mit Abzug flüssiger Schlacke einen an sich bekannten Gaserzeuger mit Drehrost verwendet, bei dem die unverbrennlichen mineralischen Bestandteile des vergasten Brennstoffs als feste Asche abgezogen werden. Das durch den bekannten Gaserzeuger mit Drehrost erzeugte rohe Produktgas enthält üblicherweise mehr Wasserdampf als das Rohgas aus dem Vergasungsreaktor 1, der mit Abzug flüssiger Schlacke arbeitet.

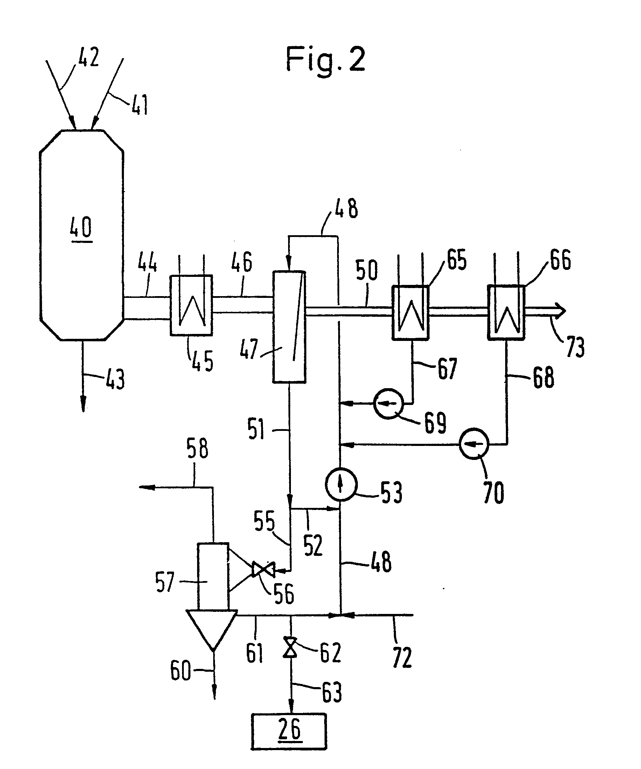

Beim Verfahren der Fig. 2 wird in einem von Einbauten freien Reaktor 40 eine Aufschlämmung aus Feinkohle und Wasser aus der Leitung 41 mit Sauerstoff aus der Leitung 42 vergast. Die hierbei gebildete flüssige Schlacke verläßt den Reaktor 40 in der Leitung 43. Das rohe Produktgas strömt in der Leitung 44 zur Dampferzeugung durch einen indirekten Wärmeaustauscher 45 und gelangt in der Leitung 46 zu einem Waschkühler 47. Zur direkten Kühlung des Gases wird dem Waschkühler 47 aus der Leitung 48 ein überwiegend aus Wasser bestehendes Kondensat zugeführt, wobei man auch hier pro m³ Gas 1 bis 5 kg Kondensat aufwendet. Das Rohgas, das in der Leitung 44 zunächst Temperaturen im Bereich von 1100 bis 1500°C aufweist, verläßt den Waschkühler 47 mit Temperaturen im Bereich von 120 bis 220° und vorzugsweise 140 bis 200°C in der Leitung 50. Die gleichen Temperaturen weist das Kondensat auf, das aus dem Waschkühler 47 durch die Leitung 51 abgezogen wird. Ein Teilstrom des Kondensats wird in der Leitung 52 mit Hilfe der Pumpe 53 zurück zum Waschkühler 47 geleitet, während das restliche Kondensat in der Leitung 55 durch das Entspannungsventil 56 in den Abscheider 57 hinein entspannt wird. Der Druck im Abscheider 57 ist höchstens halb so hoch wie der Druck im Waschkühler 47 und beträgt üblicherweise 1 bar oder wenig mehr. Der Entspannungsdampf wird in der Leitung 58 abgezogen und einer Behandlung zugeführt, wie sie z. B. bereits zusammen mit Fig. 1 erläutert wurde.

Staubhaltiges Wasser verläßt den Abscheider 57 in der Leitung 60 und ein überwiegend aus Wasser bestehendes Kondensat wird in der Leitung 61 abgezogen. Ein relativ geringer Teil dieses Abwassers wird über das Ventil 62 in der Leitung 63 einer Entsorgung 26 zugeführt, wie sie ebenfalls bereits beim Verfahren der Fig. 1 beschrieben wurde. Restliches Kondensat gelangt in der Leitung 48 zurück zum Waschkühler 47.

Das vom Waschkühler 47 kommende Gas in der Leitung 50, das u.a. auch noch erhebliche Mengen an Wasserdampf enthält, wird zunächst durch die Kühlstufe 65 geführt, eine weitere Kühlstufe 66 schließt sich an. Die beim Kühlen jeweils anfallenden Kondensatströme werden in den Leitungen 67 und 68 mit Hilfe der Pumpen 69 und 70 ebenfalls dem Kondensat der Leitung 46 zugemischt. Diese Kondensatströme decken das Wasserdefizit im zum Waschkühler gehörenden Wasserkreislauf, das durch die Sättigung des Gases im Waschkühler und durch die Abführung des Abwassers entsteht. Bei der Hochtemperaturvergasung im Gleichstrom, wie sie der Fig. 2 zugrunde liegt, ist im Rohgas und folglich auch im Kondensat nur wenig Ammoniak enthalten. Dieses wenige Ammoniak in den rückgeführten Kondensatströmen der Leitungen 67 und 68 ist nicht ausreichend, um Chlor zu neutralisieren und den pH-Wert im Wasserkreislauf auf Werte über 8 anzuheben. Deswegen werden Alkalien z. B. in Form von Natronlauge über die Leitung 72 dem System zugeführt.

**Beispiel 1**

In einer der Fig. 1 entsprechenden Verfahrensführung wird in einem Vergasungsreaktor 1 mit Abzug flüssiger Schlacke körnige Kohle mit einem Kornspektrum von 3 bis 60 mm mit Sauerstoff und Wasserdampf bei einem Druck von 25 bar vergast. Die nachfolgenden Mengenangaben, die teilweise berechnet sind, beziehen sich auf 1000 kg vergaster Kohle (wasser- und aschefrei gerechnet) mit 50 kg Feuchtigkeit, 150 kg Asche und 0,4 Gew.-% Chlor. Als Vergasungsmittel dienen 420 Nm Sauerstoff und 400 kg Wasserdampf. Bei den Kondensatströmen beträgt der Wasseranteil über 95 Vol.-%, so daß nur der Wasseranteil angegeben ist.

Den Reaktor 1 verlassen in der Leitung 5 2117 $Nm^3$ rohes Produktgas (trocken gerechnet) mit einer Temperatur von 500°C und folgender Gasanalyse:

| | |
|---|---|
| $CO_2$ | 5 Vol.-% |
| CO | 63 Vol.-% |
| $H_2$ | 25 Vol.-% |
| $CH_4$ | 6 Vol.-% |
| $N_2$ | 1 Vol.-%. |

Das Gas enthält außerdem 266 kg H20, 60 kg Teer und Öl, 1,5 kg Fettsäuren, 6 kg Ammoniak, 1 kg HCN und 4 kg Chlor als HCl.

Das in der Leitung 8 aus dem Waschkühler 6 kommende Gas enthält 877 kg Wasserdampf und weist eine Temperatur von 170°C auf, in der Leitung 10 beträgt die Temperatur 150°C und der Wasserdampfgehalt 423 kg bei einem $NH_3$-Gehalt von 13 kg und das den Kühler 11 verlassende Gas hat eine Temperatur von 105°C bei einem Wasserdampfgehalt von 87 kg.

Die Wassermengen (in kg) in den verschiedenen Leitungen ergeben sich aus der nachfolgenden Tabelle:

| Leitung | 15 | 16 | 18 | 12 |
|---|---|---|---|---|
| Wassermenge | 10 000 | 7 900 | 2 100 | 336 |

Das Wasser der Leitung 12 enthält zusätzlich 7 kg $NH_3$ Über das Entspannungsventil 19 wird die Flüssigkeit der Leitung 18 (pH-Wert etwa 9) von 25 bar auf 1,1 bar entspannt, dabei entweichen in der Leitung 21 231 kg Wasserdampf mit 3 kg $NH_3$ und 0,7 kg HCN, sie werden in eine Verbrennung gegeben, die bei 900°C betrieben wird. Durch die Leitung 22 verlassen den Abscheider 50 kg Teer und 15 kg Staub. Von dem aus dem Abscheider 20 in der Leitung 23 abgezogenen Kondensat werden 30 kg Abwasser mit 6,8 kg $NH_4Cl$ und 0,1 kg HCN, ferner Phenole und Fettsäuren, in der Leitung 27 abgezweigt und einer Entsorgung 26 zugeführt. Das übrige Kondensat, das als Hauptbestandteil 1839 kg Wasser enthält, wird zum Waschkühler 6 zurückgeführt. Insgesamt treten 10 157 kg Wasser in den Waschkühler ein. Die Entsorgung des Abwassers der Leitung 27 erfolgt durch Einblasen des Abwassers in einen Verbrennungsofen mit Wirbelschichtverbrennung. Dabei werden die organischen Bestandteile des Abwassers verbrannt und das Chlor entweicht mit den Verbrennungsgasen. Um dieses Chlor in eine deponiefähige Form zu überführen, kann man der Wirbelschichtverbrennung eine zweite Wirbelschichtstufe nachschalten, in der das Chlor z. B. durch Natronlauge gebunden und als NaCl abgetrennt wird. Auch kann man über Leitung 72 Kali- oder Natronlauge zugeben, das Abwasser in einen Verbrennungsofen einbringen, aus dem eine eingedickte Sole abgezogen wird.

Aus dieser Sole wird das neutrale Chlorid auszentrifugiert und deponiert.

# EP 0 200 259 B1

**Patentansprüche**

1. Verfahren zur Behandlung von Kondensat, das bei der Vergasung fester Brennstoffe mit mindestens einem der Vergasungsmittel Sauerstoff, Wasserdampf oder Kohlendioxid bei einem Druck von 5 bis 100 bar bei der stufenweisen Kühlung des Produktgases der Vergasung anfällt, wobei man das Produktgas zunächst durch einen Waschkühler leitet, in welchem das Produktgas mit dem weitgehend aus Wasser bestehenden Kondensat besprüht wird, wodurch Halogene weitgehend ausgewaschen werden, daß man das Produktgas in einem Abhitzekessel weiter indirekt kühlt und dabei gebildetes Kondensat mit dem Kondensat aus dem Waschkühler zu einem Halogene und Zyanide enthaltenden Kondensatgemisch, das Temperaturen von 120 bis 220°C aufweist, vereinigt, daß man das Kondensatgemisch auf einen niedrigeren Druck entspannt, wobei Entspannungsdampf und eine Flüssigphase entstehen und daß der von Halogenen praktisch freie Entspannungsdampf abgeleitet wird, dadurch gekennzeichnet, daß man den überwiegenden Teil der bei der Entspannung entstehenden Flüssigphase direkt in den Waschkühler leitet und durch Einstellen der Menge dieses Teils die Menge des Entspannungsdampfes auf mindestens 70 % des Wassergehalts des dem Waschkühler zugeführten Produktgases einstellt, daß man die restliche Flüssigphase als halogenreichen Teilstrom einer Entsorgung zuführt, daß man den pH-Wert der Flüssigkeit, die im Kreislauf über den Waschkühler und die Entspannungsverdampfung geführt wird, auf über 8 einstellt, wobei man zum Einstellen des pH-Wertes Kondensat aus mindestens einer dem Abhitzekessel folgenden Produktgas-Kühlung dem dem Waschkühler aufzugebenden Kondensat zumischt, und daß man den pH-Wert im Kondensatgemisch vor der Entspannung

a) entweder auf unter 10 einstellt, wobei sich Zyanide im Entspannungsdampf anreichern,
b) oder auf über 10 bis 12 einstellt, wobei sich Zyanide bei der Entspannung in der Flüssigphase anreichern.

2. Verfahren nach Anspruch 1, dadurch gekennzeichnet, daß der Entspannungsdampf nach Kondensation mit seinen darin enthaltenen organischen Stoffen einer extraktiven und/oder einer biologischen Wasserbehandlung zugeführt wird.

3. Verfahren nach Anspruch 1 oder 2, dadurch gekennzeichnet, daß der Entspannungsdampf mit seinen darin enthaltenen organischen Stoffen einer thermischen Behandlung, insbesondere Verbrennung bei Temperaturen über 800°C, unterzogen wird.

4. Verfahren nach Anspruch 1 oder einem der folgenden, dadurch gekennzeichnet, daß der halogenreiche Teilstrom unter Zusatz von Alkalien verbrannt wird.

**Claims**

1. A method for the treatment of condensate which is produced during the gasification of solid fuels with at least one of the gasifying agents oxygen, water vapour or carbon dioxide at a pressure of 5 to 100 bar during the step-by-step cooling of the product gas of the gasification, the product gas first being passed through a washing cooler in which the product gas is sprayed with the condensate which consists largely of water, which largely washes out halogens, that the product gas is further cooled indirectly in a waste heat boiler and condensate formed thereby is combined with the condensate from the washing cooler to form a condensate mixture containing halogens and cyanides which has temperatures of 120 to 220°C, that the condensate mixture undergoes pressure relief to a lower pressure, producing flash vapour and a liquid phase, and that the flash vapour which is practically free of halogens is carried away, characterised in that the predominant portion of the liquid phase produced during pressure relief is passed directly into the washing cooler and that by adjusting the quantity of this portion the quantity of the flash vapour is set to at least 70 % of the water content of the product gas which is supplied to the washing cooler, that the rest of the liquid phase is supplied to a disposal device as a halogen-rich substream, that the pH value of the liquid which is circulated through the washing cooler and the flash distillation process is set to more than 8, condensate from at least one product gas cooling process following the waste heat boiler being added to the condensate which is to be fed to the washing cooler in order to adjust the pH value, and that the pH value in the condensate mixture before pressure relief is

a) either set to less than 10, whereby cyanides build up in the flash vapour,
b) or set to above 10 to 12, whereby cyanides build up in the liquid phase upon pressure relief.

2. A method according to Claim 1, characterised in that the flash vapour with its organic substances contained therein is supplied to an extractive and/or a biological water treatment after condensation.

3. A method according to Claim 1 or 2, characterised in that the flash vapour with its organic substances contained therein is subjected to heat treatment, in particular burning at temperatures of above 800°C.

4. A method according to Claim 1 or one of the following claims, characterised in that the halogen-rich substream is burned with the addition of alkalis.

# EP 0 200 259 B1

## Revendications

1. Procédé de traitement d'un condensat, qui se forme lors de la gazéification de combustibles solides par au moins l'un des agents de gazéification que sont l'oxygène, la vapeur d'eau ou le dioxyde de carbone, sous une pression de 5 à 100 bar, lors du refroidissement par étapes du gaz produit par la gazéification, qui consiste à envoyer le gaz produit d'abord à un dispositif de refroidissement par lavage, dans lequel le gaz produit reçoit en projection le condensat constitué essentiellement d'eau, de manière à éliminer dans une grande mesure par lavage les halogènes, à continuer à refroidir indirectement le gaz produit dans une chaudière de récupération et à réunir le condensat formé au condensat provenant du dispositif de refroidissement par lavage en un mélange de condensats contenant des halogènes et des cyanures, qui a des températures de 120 à 220°C, à détendre le mélange de condensats jusqu'à une pression plus basse avec formation de vapeur de détente et d'une phase liquide et à évacuer la vapeur de détente pratiquement exempte d'halogène, caractérisé en ce qu'il consiste à envoyer la partie prépondérante de la phase liquide formée lors de la détente directement au dispositif de refroidissement par lavage et à régler, en réglant la quantité de cette partie, la quantité de la vapeur de détente à au moins 70 % de la teneur en eau du gaz produit envoyé au dispositif de refroidissement par lavage, à envoyer la phase liquide restante sous la forme d'un courant partiel riche en halogènes à une épuration, à régler à une valeur supérieure à 8 le pH du liquide qui est envoyé en circuit fermé dans le dispositif de refroidissement par lavage et dans l'installation d'évaporation avec détente, à mélanger, pour régler la valeur du pH du condensat provenant de l'un au moins des dispositifs de refroidissement du gaz produit faisant suite à la chaudière de récupération, au condensat à charger au dispositif de refroidissement par lavage et à régler le pH du mélange de condensat, avant la détente:

a) soit à une valeur inférieure à 10, la vapeur de détente s'enrichissant en cyanures,
b) soit au-dessus de 10 à 12, la phase liquide s'enrichissant en cyanures lors de la détente.

2. Procédé suivant la revendication 1, caractérisé en ce qu'il consiste à envoyer la vapeur de détente, après condensation, avec les substances organiques qui y sont contenues, à un traitement à l'eau d'extraction et/ou à un traitement à l'eau biologique.

3. Procédé suivant la revendication 1 ou 2, caractérisé en ce qu'il consiste à soumettre la vapeur de détente, avec les substances organiques qu'elle contient, à un traitement thermique, notamment à une combustion à des températures supérieures à 800°C.

4. Procédé suivant la revendication 1 ou une des suivantes, caractérisé en ce qu'il consiste à brûler le courant partiel riche en halogènes par addition de produits alcalins.

# Fig.1

Fig.2